# EUROPÄISCHE PATENTANMELDUNG

(11) **EP 2 832 572 A1**
(43) Veröffentlichungstag der Anmeldung: **04.02.2015**
(21) Anmeldenummer: 13178897.8
(22) Anmeldetag: 01.08.2013
(51) Int. Cl.: B60K 15/077, B60K 15/03

(54) **Kraftstofftank**

(71) Anmelder: Magna Steyr Fuel Systems GesmbH, 8261 Sinabelkirchen (AT)
(72) Erfinder: Kahler, Bernd, 8020 Graz (AT); Schmid, Michael, 8020 Graz (AT)
(74) Vertreter: Rausch, Gabriele

(57) **Zusammenfassung**

Ein Kraftstofftank für ein Kraftfahrzeug, umfassend einen ersten Tank (1), eine Kraftstoffpumpe (3) und eine Motorvorlaufleitung (11), wobei über die Motorvorlaufleitung (11) Kraftstoff aus dem ersten Tank (1) entnommen werden und einem Motor zugeführt werden kann, wobei die Motorvorlaufleitung (11) an ihrem dem ersten Tank (1) zugewandten Ende mit zumindest zwei ersten Saugleitungen (4) verbunden ist, so dass durch einen Unterdruck in der Motorvorlaufleitung (11) auch ein Unterdruck in den ersten Saugleitungen (4) entsteht, wobei an den Enden der ersten Saugleitungen (4) jeweils ein erstes Schwimmerventil (5) angeordnet ist, wobei die ersten Schwimmerventile (5) so ausgeführt sind, dass sie geschlossen sind wenn sie nicht von Kraftstoff umgeben sind und geöffnet sind, wenn sie von Kraftstoff umgeben sind.

## Beschreibung

### Gebiet der Erfindung

Die vorliegende Erfindung betrifft einen Kraftstofftank für ein Kraftfahrzeug, insbesondere zur Verwendung in einem Nutzfahrzeug.

### Stand der Technik

Kraftstofftanks für Kraftfahrzeuge sind hinlänglich bekannt. Sie werden üblicherweise genutzt um einen Antriebsmotor des Kraftfahrzeuges mit Kraftstoff zu versorgen, und verwenden dazu eine Kraftstoffpumpe und eine Motorvorlaufleitung, um über die Motorvorlaufleitung Kraftstoff aus dem Tank zu entnehmen und dem Motor zuzuführen.

Dabei ist es ein bekanntes Problem, bei geringem Füllstand an Kraftstoff im Tank, beispielsweise bei der Erstbetankung des Kraftfahrzeuges oder bei Betrieb mit Restmengen an Kraftstoff, den Kraftstoff zuverlässig aus dem Tank zu entnehmen.

Aus der FR 2 639 405 ist eine Vorrichtung zum Fördern einer Flüssigkeit aus einem Speicher bekannt, die zumindest zwei Fördermittel in Bodennähe des Speichers umfasst. Die Fördermittel sind durch eine zentrale Auswahlvorrichtung miteinander verbunden. Die zentrale Auswahlvorrichtung bestimmt welches der Fördermittel mehr oder weniger Flüssigkeit aus dem Speicher fördert. Die Auswahlvorrichtung ist jedoch kompliziert, schwierig herzustellen und scheint fehleranfällig.

### Zusammenfassung der Erfindung

Es ist eine Aufgabe der Erfindung, einen verbesserten Kraftstofftank für ein Kraftfahrzeug, insbesondere für ein Nutzfahrzeug, anzugeben, der einen zuverlässigen Betrieb auch bei geringer Kraftstoffmenge im Tank ermöglicht und dabei einfach herstellbar ist. Insbesondere sollen die erforderliche Erstbetankungsmenge für das Kraftfahrzeug und die nicht absaugbare Restmenge des Kraftstoffs im Tank reduziert werden.

Die Lösung der Aufgabe erfolgt durch einen Kraftstofftank für ein Kraftfahrzeug, umfassend einen ersten Tank, eine Kraftstoffpumpe und eine Motorvorlaufleitung, wobei über die Motorvorlaufleitung Kraftstoff aus dem ersten Tank entnommen werden und einem Motor zugeführt werden kann, wobei die Motorvorlaufleitung an ihrem dem ersten Tank zugewandten Ende mit zumindest zwei ersten Saugleitungen verbunden ist, so dass durch einen Unterdruck in der Motorvorlaufleitung auch ein Unterdruck in den ersten Saugleitungen entsteht, wobei an den Enden der ersten Saugleitungen jeweils ein erstes Schwimmerventil angeordnet ist, wobei die ersten Schwimmerventile so ausgeführt sind, dass sie geschlossen sind wenn sie nicht von Kraftstoff umgeben sind und geöffnet sind, wenn sie von Kraftstoff umgeben sind.

Durch diese Ausgestaltung des Kraftstofftanks wird bei Betrieb der Kraftstoffpumpe nicht nur durch die Motorvorlaufleitung Kraftstoff aus einem einzigen Bereich des Tanks gesaugt, sondern durch die Verbindung mit zumindest zwei Saugleitungen direkt aus zumindest zwei Bereichen des Tanks Kraftstoff gesaugt. Dabei können die Enden der Saugleitungen an deutlich verschiedenen Positionen im Tank positioniert sein, so dass bei geringem Kraftstoff-Füllstand je nach Geometrie und Anordnung der Teile eine der Saugleitungen noch Kraftstoff absaugen kann, wenn die andere Leitung keinen Kraftstoff erreicht. Diese Situation kann auch abhängig vom Fahrzustand eintreten, beispielsweise bei Schräglage des Tanks, wie zum Beispiel bei einer Kurvenfahrt des Kraftfahrzeuges.

Damit von einem Ende einer Saugleitung, das nicht von Kraftstoff umgeben ist, nicht Luft angesaugt wird, sind an den Enden der Saugleitungen Schwimmerventile angeordnet, die geschlossen sind wenn sie nicht von Kraftstoff umgeben sind und geöffnet sind, wenn sie von Kraftstoff umgeben sind.

Natürlich können bei einem erfindungsgemäßen Tanksystem vorteilhaft auch mehr als zwei Saugleitungen, beispielsweise drei, vier und mehr Saugleitungen mit der Motorvorlaufleitung in der genannten Weise verbunden sind.

Weiterbildungen der Erfindung sind in den abhängigen Ansprüchen, der Beschreibung sowie den beigefügten Zeichnungen angegeben.

Bevorzugt ist die Motorvorlaufleitung an ihrem dem ersten Tank zugewandten Ende über ein erstes T-Verbindungsstück mit den zumindest zwei ersten Saugleitungen verbunden.

Bevorzugt ist das erste T-Verbindungsstück im ersten Tank angeordnet, insbesondere in Bodennähe des ersten Tanks.

Besonders bevorzugt ist mit der Motorvorlaufleitung ein Sicherheitsventil verbunden, welches mit einem Behälter verbunden ist. Durch das Sicherheitsventil ist gewährleistet dass in der Motorvorlaufleitung auch dann kein zu starker Unterdruck entsteht, wenn alle Schwimmerventile an den Saugleitungen geschlossen sind. In diesem Fall wird aus dem an das Sicherheitsventil angeschlossenen Behälter Kraftstoff angesaugt und dem Motor über die Motorvorlaufleitung zugeführt. Dadurch ist es dem Nutzer des Kraftfahrzeuges möglich noch ein paar Kilometer zu fahren, beispielsweise zum nächsten Parkplatz, ohne ein plötzliches "Liegenbleiben" des Fahrzeuges befürchten zu müssen.

Bevorzugt sind die Enden der ersten Saugleitungen mit den ersten Schwimmerventilen in Bodennähe des ersten Tanks angeordnet, so dass sich am Boden sammelnde Restmengen von Kraftstoff abgesaugt werden können.

Bevorzugt sind die Enden der ersten Saugleitungen mit den ersten Schwimmerventilen an weit voneinander beabstandeten Punkten des ersten Tanks angeordnet sind, insbesondere in der Nähe zweier gegenüberliegender Wände des ersten Tanks. Dadurch kann beispielsweise bei einer Schräglage des Tanks die Wahrscheinlichkeit erhöht werden, dass zumindest eines der Enden der Saugleitungen von Kraftstoff umgeben ist.

Bevorzugt mündet eine Rücklaufleitung vom Motor im ersten Tank, so dass zurückfließender Kraftstoff wieder aus dem Tank entnommen werden kann. Besonders bevorzugt mündet die Rücklaufleitung in den an das Sicherheitsventil angeschlossenen Behälter, so dass dieser für die Funktion des Sicherheitsventils stets gefüllt bleibt.

Bevorzugt ist an den Schwimmerventilen und/oder im oberen Bereich des mit einem Sicherheitsventil verbundenen Behälters jeweils ein Filtersieb angeordnet. Dadurch kann verhindert werden, dass Verunreinigungen an die Schwimmerventile und durch die Schwimmerventile in die Saugleitungen gelangen können bzw. in den Behälter.

Bevorzugt weist der erste Tank ein Überschlagsventil (Roll Over Valve, ROV) auf.

Gemäß einer Ausführungsform der Erfindung umfasst der Kraftstofftank einen zweiten Tank, wobei die Motorvorlaufleitung über eine Verbindungsleitung mit dem zweiten Tank verbunden ist. An den ersten Tank des Kraftstofftanks ist zur Vergrößerung des Tankvolumens ein zusätzlicher, zweiter Tank über eine Verbindungsleitung angeschlossen. Die Verbindungsleitung ist ebenso direkt mit der Motorvorlaufleitung verbunden, wie die Saugleitungen, so dass über den durch die Kraftstoffpumpe erzeugten Unterdruck auch über die Verbindungsleitung aus dem zweiten Tank Kraftstoff gesaugt werden kann.

Besonders bevorzugt ist in diesem Fall die Verbindungsleitung an ihrem dem zweiten Tank zugewandten Ende mit zumindest zwei zweiten Saugleitungen verbunden, insbesondere über ein zweites T-Verbindungsstück, so dass durch einen Unterdruck in der Verbindungsleitung auch ein Unterdruck in den zweiten Saugleitungen entsteht, wobei an den Enden der zweiten Saugleitungen jeweils ein zweites Schwimmerventil angeordnet ist, wobei die zweiten Schwimmerventile so ausgeführt sind, dass sie geschlossen sind wenn sie nicht von Kraftstoff umgeben sind und geöffnet sind, wenn sie von Kraftstoff umgeben sind. Im zweiten Tank sind demnach ebenfalls Saugleitungen angeordnet, wie im ersten Tank. Auch kann der zweite Tank und die darin befindlichen Saugleitungen vorteilhaft die genannten weiteren Merkmale des ersten Tanks bzw. der ersten Saugleitungen aufweisen, wie beispielsweise die Positionierung der Enden der Saugleitungen an voneinander beabstandeten Positionen in Bodennähe.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Kraftstofftanks.
- Fig. 2: ist eine schematische Darstellung eines weiteren erfindungsgemäßen Kraftstofftanks, der zwei Tanks umfasst.
- Fig. 3: ist eine Seitenansicht eines Schwimmerventils für einen erfindungsgemäßen Kraftstofftank.

### Detaillierte Beschreibung der Erfindung

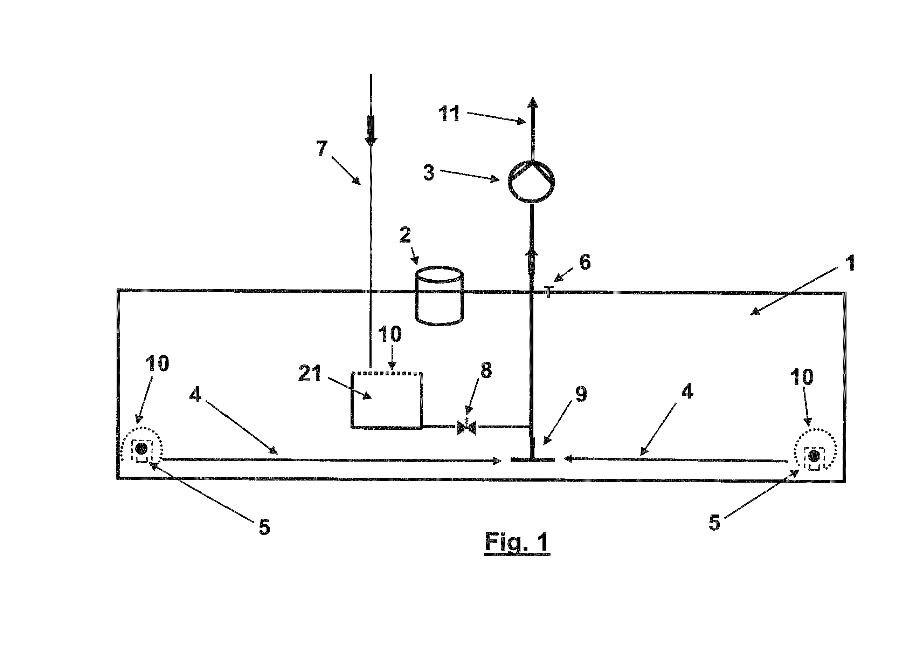

In Fig. 1 ist ein erfindungsgemäßer Kraftstofftank dargestellt, mit einem ersten Tank 1 zur Aufnahme des Kraftstoffs, der über ein Einfüllrohr 2 betankt werden kann und an dessen Decke ein Überschlagsventil 6 aufweist. Eine Kraftstoffpumpe 3 kann den Kraftstoff über eine Motorvorlaufleitung 11 aus dem Tank 1 fördern und einem nicht dargestellten Motor zuführen. Die Motorvorlaufleitung 11 ist an ihrem dem ersten Tank 1 zugewandten Ende über ein einfaches T-Verbindungsstück 9 mit zwei ersten Saugleitungen 4 verbunden, so dass durch einen von der Kraftstoffpumpe 3 erzeugten Unterdruck in der Motorvorlaufleitung 11 auch ein Unterdruck in den ersten Saugleitungen 4 entsteht. An den Enden der ersten Saugleitungen 4 ist jeweils ein erstes Schwimmerventil 5 angeordnet, wobei die ersten Schwimmerventile 5 so ausgeführt sind, dass sie geschlossen sind wenn sie nicht von Kraftstoff umgeben sind und geöffnet sind, wenn sie von Kraftstoff umgeben sind.

Mit der Motorvorlaufleitung 11 ist, vor dem ersten T-Verbindungsstück 9, ein Sicherheitsventil 8 verbunden, das gewährleistet dass in der Motovorlaufleitung 11 kein zu starker Unterdruck entsteht. Bei zu großem Unterdruck öffnet das Sicherheitsventil 8 und Kraftstoff wird aus dem Behälter 21 angesaugt.

An den ersten Schwimmerventilen 5 und an dem Behälter 21 ist jeweils ein Filtersieb 10 angeordnet.

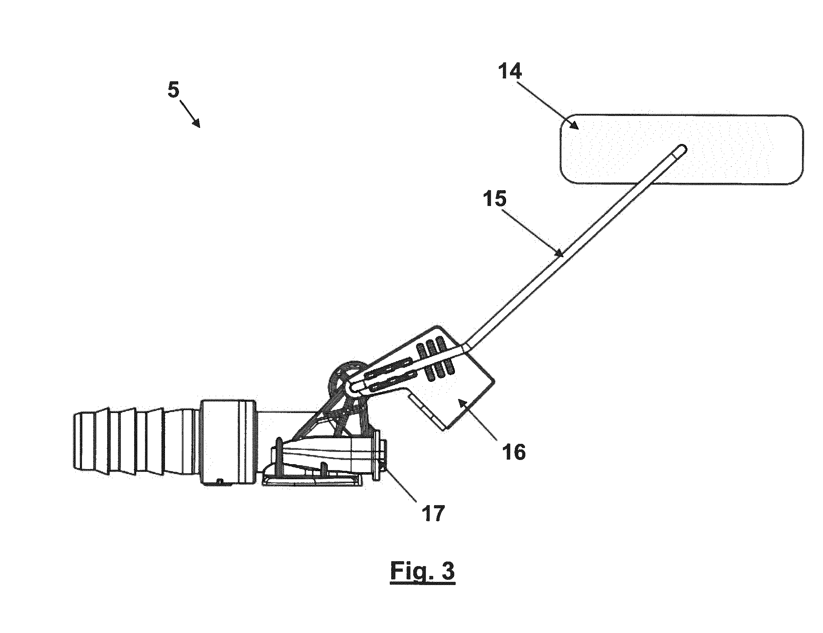

Eine mögliche Ausführungsform eines geeigneten Schwimmerventils 5 ist in Fig. 3 dargestellt. Dabei ist ein Schwimmer 14 über einen Hebel 15 mit einem Absperrkörper 16 verbunden, der auf einem Ventilsitz 17 sitzen kann um das Schwimmerventil 5 zu schließen. Wird der Schwimmer 14 durch das Niveau des Kraftstoffs angehoben, so nimmt dieser über den Hebel 15 den Absperrkörper 16 mit, so dass das Schwimmerventil 5 geöffnet wird.

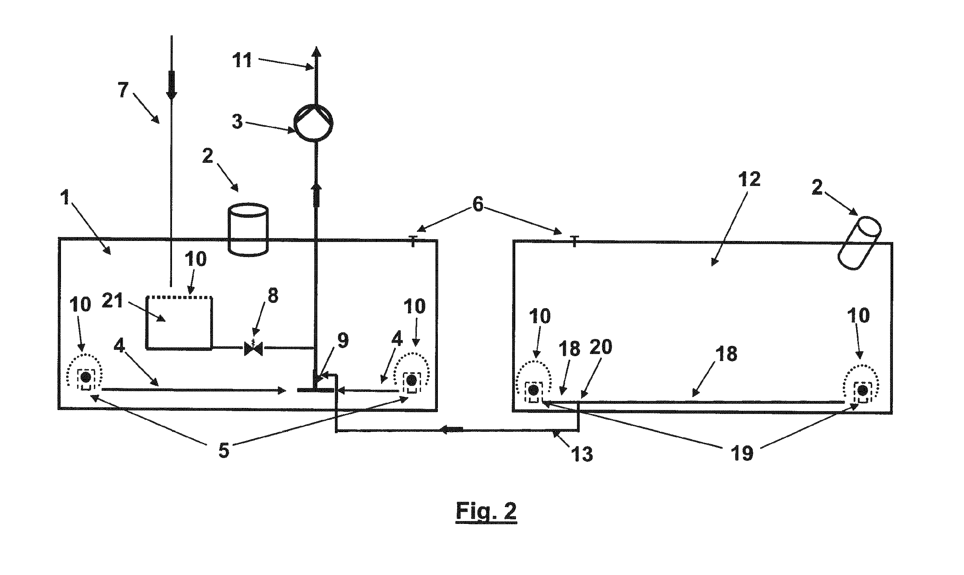

In Fig. 2 ist eine Ausführungsform eines erfindungsgemäßen Kraftstofftanks dargestellt, mit einem zusätzlichen, zweiten Tank 12. Der zweite Tank 12 ist mit dem ersten Tank 1 über eine Verbindungsleitung 13 verbunden, wobei die Verbindungsleitung 13 wie die ersten Saugleitungen 4 in die Motorvorlaufleitung 11 mündet, beispielsweise beim ersten T-Verbindungsstück 9. Die Verbindungsleitung 13 ist über ein zweites T-Verbindungsstück 20 mit zwei zweiten Saugleitungen 18 im zweiten Tank 12 verbunden, so dass über den selben Unterdruck wie im ersten Tank 1 auch der Kraftstoff aus dem zweiten Tank 12 abgesaugt werden kann.

An den Enden der zweiten Saugleitungen 18 sind jeweils zweite Schwimmerventile 19 angeordnet, die bevorzugt gleich aufgebaut sind wie die ersten Schwimmerventile 5.

### Bezugszeichenliste

- 1: erster Tank
- 2: Einfüllrohr
- 3: Kraftstoffpumpe
- 4: erste Saugleitung
- 5: erstes Schwimmerventil
- 6: Überschlagsventil (ROV)
- 7: Rücklaufleitung
- 8: Sicherheitsventil
- 9: erstes T-Verbindungsstück
- 10: Filtersieb
- 11: Motorvorlaufleitung
- 12: zweiter Tank
- 13: Verbindungsleitung
- 14: Schwimmer
- 15: Hebel
- 16: Absperrkörper
- 17: Ventilsitz
- 18: zweite Saugleitung
- 19: zweites Schwimmerventil
- 20: zweites T-Verbindungsstück
- 21: Behälter

## Patentansprüche

1. Kraftstofftank für ein Kraftfahrzeug, umfassend einen ersten Tank (1), eine Kraftstoffpumpe (3) und eine Motorvorlaufleitung (11), wobei über die Motorvorlaufleitung (11) Kraftstoff aus dem ersten Tank (1) entnommen werden und einem Motor zugeführt werden kann,
**dadurch gekennzeichnet, dass** die Motorvorlaufleitung (11) an ihrem dem ersten Tank (1) zugewandten Ende mit zumindest zwei ersten Saugleitungen (4) verbunden ist, so dass durch einen Unterdruck in der Motorvorlaufleitung (11) auch ein Unterdruck in den ersten Saugleitungen (4) entsteht, wobei an den Enden der ersten Saugleitungen (4) jeweils ein erstes Schwimmerventil (5) angeordnet ist, wobei die ersten Schwimmerventile (5) so ausgeführt sind, dass sie geschlossen sind wenn sie nicht von Kraftstoff umgeben sind und geöffnet sind, wenn sie von Kraftstoff umgeben sind.

2. Kraftstofftank nach Anspruch 1,
**dadurch gekennzeichnet, dass** die Motorvorlaufleitung (11) an ihrem dem ersten Tank (1) zugewandten Ende über ein erstes T-Verbindungsstück (9) mit den zumindest zwei ersten Saugleitungen (4) verbunden ist.

3. Kraftstofftank nach Anspruch 2,
**dadurch gekennzeichnet, dass** das erste T-Verbindungsstück (9) im ersten Tank (1) angeordnet ist, insbesondere in Bodennähe des ersten Tanks (1).

4. Kraftstofftank nach zumindest einem der vorhergehenden Ansprüche,
**dadurch gekennzeichnet, dass** mit der Motorvorlaufleitung (11) ein Sicherheitsventil (8) verbunden ist, welches mit einem Behälter (21) verbunden ist.

5. Kraftstofftank nach zumindest einem der vorhergehenden Ansprüche,
**dadurch gekennzeichnet, dass** die Enden der ersten Saugleitungen (4) mit den ersten Schwimmerventilen (5) in Bodennähe des ersten Tanks (1) angeordnet sind.

6. Kraftstofftank nach zumindest einem der vorhergehenden Ansprüche,
**dadurch gekennzeichnet, dass** die Enden der ersten Saugleitungen (4) mit den ersten Schwimmerventilen (5) an weit voneinander beabstandeten Punkten des ersten Tanks (1) angeordnet sind, insbesondere in der Nähe zweier gegenüberliegender Wände des ersten Tanks (1).

7. Kraftstofftank nach zumindest einem der vorhergehenden Ansprüche,
**dadurch gekennzeichnet, dass** eine Rücklaufleitung (7) vom Motor im ersten Tank (1) mündet.

8. Kraftstofftank nach Anspruch 4,
**dadurch gekennzeichnet, dass** eine Rücklaufleitung (7) vom Motor in den Behälter (21) mündet.

9. Kraftstofftank nach zumindest einem der vorhergehenden Ansprüche,
**dadurch gekennzeichnet, dass** an den ersten Schwimmerventilen (5) jeweils ein Filtersieb (10) angeordnet ist.

10. Kraftstofftank nach Anspruch 4,
**dadurch gekennzeichnet, dass** an dem Behälter (21) ein Filtersieb (10) angeordnet ist.

11. Kraftstofftank nach zumindest einem der vorhergehenden Ansprüche,
**dadurch gekennzeichnet, dass** der erste Tank (1) ein Überschlagsventil (6) aufweist.

12. Kraftstofftank nach zumindest einem der vorhergehenden Ansprüche,
**dadurch** geke**nnzeichnet,** dass der kraftstofftank einen zweiten Tank (12) umfasst, wobei die Motorvorlaufleitung (11) über eine Verbindungsleitung (13) mit dem zweiten Tank (12) verbunden ist.

13. Kraftstofftank nach Anspruch 12,
**dadurch** geke**nnzeichnet,** dass die Verbindungsleitung (13) an ihrem dem zweiten Tank (12) zugewandten Ende mit zumindest zwei zweiten Saugleitungen (18) verbunden ist, insbesondere über ein zweites T-Verbindungsstück (20), so dass durch einen Unterdruck in der Verbindungsleitung (13) auch ein Unterdruck in den zweiten Saugleitungen (18) entsteht, wobei an den Enden der zweiten Saugleitungen (18) jeweils ein zweites Schwimmerventil (19) angeordnet ist, wobei die zweiten Schwimmerventile (19) so ausgeführt sind, dass sie geschlossen sind wenn sie nicht von Kraftstoff umgeben sind und geöffnet sind, wenn sie von Kraftstoff umgeben sind.
